# FASCICULE DE BREVET EUROPEEN

(11) **EP 2 307 324 B1**
(45) Date de publication et mention de la délivrance du brevet: **31.08.2016**
(21) Numéro de dépôt: 09772471.0
(22) Date de dépôt: 01.07.2009
(51) Int. Cl.: C03B 5/235, F23D 14/84, F23D 14/22

(54) **ENSEMBLE BRÛLEUR A FLEXIBILITÉ RENFORCÉE**
BRENNERANLAGE MIT ERHÖHTER FLEXIBILITÄT
BURNER ASSEMBLY WITH ENHANCED FLEXIBILITY

(30) Priorité: 02.07.2008 EP 08011920
(43) Date de publication de la demande: 13.04.2011
(73) Titulaire: L'Air Liquide Société Anonyme pour l'Etude et l'Exploitation des Procédés Georges Claude, 75007 Paris (FR)
(72) Inventeur: CONSTANTIN, Gabriel, 78530 Buc (FR); TSIAVA, Rémi, F-91250 Saint Germain-les-corbeil (FR); GRAND, Benoit, F-78000 Versailles (FR); DOUXCHAMPS, Olivier, 1030 Bruxelles (BE); AMIRAT, Mohand, F-28320 Gas (FR); WAGEMANS, Fabrice, 7141 Carnières (BE); BEHEN, Johan, 7080 Frameries (BE)
(74) Mandataire: De Vleeschauwer, Natalie Y.L.D.
(86) Numéro de dépôt international: PCT/EP2009/058248
(87) Numéro de publication internationale: WO 2010/000771

(56) Documents cités:
- WO-A-2007/048429
- FR-A- 2 834 780
- US-A1- 2007 037 106
- US-B1- 6 331 107

## Description

La présente invention concerne un ensemble brûleur à flexibilité renforcée et en particulier un tel brûleur bicombustible et/ou à combustion étagée.

Il est bien connu d'utiliser des brûleurs, et notamment des brûleurs à combustion étagée, pour le chauffage d'une charge dans un four, tel qu'un four de fusion. Un exemple d'un tel brûleur est donné dans US 6 331 107 B1.

Une maintenance régulière du brûleur est indispensable pour son bon fonctionnement. La maintenance d'un brûleur comporte généralement l'inspection de l'état des injecteurs ou cannes de combustible, leur nettoyage ou leur remplacement.

Une telle maintenance nécessite normalement la mise hors fonction du brûleur pour la durée de la procédure de maintenance

Dans le cas d'un four muni d'un seul brûleur, la mise hors fonction du brûleur correspond à un arrêt du chauffage du four.

Dans le cas d'un four muni de plusieurs brûleurs, il est en théorie envisageable de compenser la perte de puissance due à la mise hors fonction d'un des brûleurs pour sa maintenance par une augmentation correspondante de la puissance des autres brûleurs du four. Toutefois, une telle démarche entraîne un changement dans le profil thermique du four durant la mise hors fonction du brûleur.

Il est évident que le contrôle du champ de températures dans un four industriel est essentiel pour la performance du four et pour la qualité du produit issu du four.

Il découle de ce qui précède que, du fait que la maintenance d'un brûleur entraîne sa mise hors fonction, l'opération de maintenance du ou des brûleurs d'un four industriel a un impact négatif transitoire sur la performance du four et/ou la qualité du produit. D'autre part, la maintenance du ou des brûleurs est indispensable pour la sécurité du four et sa productivité à plus long terme.

Il existe donc un besoin de pouvoir au moins limiter le temps d'arrêt d'un brûleur dans un four industriel lors de sa maintenance.

Un autre problème important auquel les opérateurs de fours industriels doivent faire face est l'instabilité du prix des combustibles, tel que le gaz naturel.

En réponse, les opérateurs de fours industriels souhaitent pouvoir souscrire à des contrats de fourniture intermittents de combustible. Cela se concrétise par un moindre coût de combustible ; mais en contrepartie les distributeurs peuvent arrêter temporairement l'approvisionnement. Les clients sont prévenus à l'avance de l'arrêt de la fourniture et les contrats sont négociés de manière à ce que plus les délais d'information sont courts plus le coût de combustible négocié est faible.

Les opérateurs d'un four industriel doivent alors être capable de changer le type de combustible, par exemple intervertir le gaz naturel avec du combustible liquide, dans un temps très court.

Le passage d'un brûleur d'un premier combustible à un deuxième combustible nécessite généralement le remplacement des injecteurs de combustible et donc normalement une mise hors fonction du brûleur. Cette opération peut prendre plusieurs heures dans le cas de réactifs froids, mais elle peut s'étaler sur plusieurs jours dans le cas de réactifs préchauffés.

Pour les raisons indiquées ci-dessus en rapport avec la maintenance des brûleurs, il existe un besoin de pouvoir limiter le temps d'arrêt d'un brûleur dans un four industriel lors d'un tel changement d'un combustible à un autre.

La présente invention propose un ensemble brûleur qui permet de procéder à la maintenance des cannes combustible sans avoir à arrêter le brûleur, voire sans avoir à diminuer la puissance du brûleur.

La présente invention propose également un ensemble brûleur qui permet le passage d'un premier combustible à un deuxième combustible ou à une combinaison de plusieurs combustibles et vice versa sans avoir à arrêter le brûleur, voire sans avoir à diminuer la puissance du brûleur.

La présente invention concerne plus particulièrement un ensemble brûleur comprenant :
- un bloc brûleur,
- n cannes ou injecteurs de combustible dites cannes de premier combustible, avec n > 1,
- un dispositif d'alimentation de comburant et
- un premier dispositif d'alimentation de combustible.

Selon l'invention, le bloc brûleur présente une face d'entrée et une face de sortie, au moins un passage de comburant entre la face d'entrée et la face de sortie et au moins un passage de canne de combustible entre la face d'entrée et la face de sortie. Ledit bloc brûleur est tel que m cannes de combustible peuvent simultanément être montées dans le bloc brûleur à travers le au moins un passage de canne de combustible, avec m >1.

Chacune des cannes de premier combustible est apte à être montée dans le ou dans un des passages de canne de combustible et à être enlevée dudit passage de canne de combustible par la face d'entrée du bloc brûleur. Pour la maintenance desdites cannes, il est en effet important de pouvoir introduire et enlever les cannes sans que les cannes, le bloc brûleur et en particulier le ou les passages de canne de combustible s'en trouvent endommagés.

Le dispositif d'alimentation de comburant est apte à transporter un flux de comburant d'une source de comburant vers le bloc brûleur pour son injection à travers le au moins un passage de comburant dans une zone de combustion située en aval de la face de sortie.

De manière analogue, le premier dispositif d'alimentation de combustible est apte à transporter un flux d'un premier combustible d'une source de premier combustible vers le bloc brûleur pour son injection dans la zone de combustion à travers un ou des passages de cannes de combustible. Ce premier dispositif d'alimentation de combustible comprend une première ligne d'alimentation, un premier débitmètre, un premier distributeur et n premières lignes flexibles reliant le premier distributeur aux n cannes de premier combustible. La première ligne d'alimentation est plus particulièrement apte à transporter ledit flux du premier combustible de la source de premier combustible vers le premier distributeur. Le premier débitmètre est apte à réguler le débit du flux du premier combustible de la source de premier combustible vers le premier distributeur et le premier distributeur est apte à répartir le flux de premier combustible en n flux subsidiaires sur les n premières lignes flexibles.

Les lignes flexibles facilitent fortement l'introduction des cannes de combustible dans le ou les passages de canne de combustible ainsi que le retrait des cannes de combustible desdits passages.

L'ensemble brûleur suivant la présente invention se caractérise notamment en ce que le premier dispositif d'alimentation de combustible comporte une ou plusieurs vannes permettant de fermer et d'ouvrir les n premières lignes flexibles une à une de manière à ce que, quand x des n premières lignes flexibles sont fermées par lesdites une ou plusieurs vannes, avec 1 ≤ x ≤ n-1, le premier distributeur répartit le flux de premier combustible sur les n-x premières lignes flexibles qui sont ouvertes pour son injection dans la zone de combustion par le ou les cannes de premier combustible reliées auxdites premières lignes flexibles ouvertes.

L'ensemble brûleur suivant l'invention permet ainsi, pendant la maintenance d'une, voire éventuellement plusieurs de ses cannes de premier combustible, de maintenir l'ensemble brûleur en opération et ceci sans avoir à réduire le niveau de la puissance fournie par ledit ensemble brûleur à la zone de combustion. De cette manière, l'effet de la maintenance des cannes de premier combustible sur le profil thermique dans le four, et donc sur la productivité du four et/ou la qualité du produit issu du four, est fortement réduit.

Evidemment, quand le nombre x de premières lignes flexibles fermées par lesdites une ou plusieurs vannes est égal à n-1, la totalité du flux de premier combustible est envoyée dans la seule première ligne flexible laissée ouverte par le premier distributeur. Quand toutes les premières lignes flexibles sont fermées, aucun flux de premier combustible n'est injecté dans la zone de combustion.

Chaque première ligne flexible peut, par exemple, être munie d'une vanne permettant d'ouvrir et de fermer cette ligne flexible. Le premier dispositif d'alimentation de combustible peut également comporter une vanne qui permet de fermer et d'ouvrir sélectivement une ou plusieurs des premières lignes flexibles.

L'ensemble brûleur peut comporter une unité centrale de commande pour l'ouverture et la fermeture des premières lignes flexibles par la ou les vannes du premier dispositif d'alimentation de combustible et/ou des moyens pour l'opération manuelle de cette ou ces vannes.

Dans le présent contexte on considère qu'une ligne flexible est fermée quand elle ne permet pas le passage d'un flux de combustible et qu'une ligne flexible est ouverte quand elle permet le passage d'un flux de combustible à travers la ligne flexible.

Le premier combustible peut en particulier être un combustible gazeux (tel que le gaz naturel) ou un combustible liquide, comme le fioul.

Selon une forme de réalisation le nombre n de cannes de premier combustible est égal au nombre m de passages de cannes de combustible dans le bloc brûleur.

Selon une forme de réalisation alternative le nombre n de cannes de premier combustible est égal au nombre m de passages de cannes de combustible +1.

Ainsi, pour un ensemble brûleur ayant en opération normale, une injection de premier combustible dans la zone de combustion au moyen de m cannes de premier combustible, cette forme de réalisation permet, lors de la mise hors fonction d'une des cannes de premier combustible pour sa maintenance par la fermeture de la première ligne flexible correspondante, de remplacer dans le bloc brûleur, la canne en maintenance par la m+1ème canne de premier combustible et d'ouvrir la première ligne flexible qui correspond à cette m+1ème canne de manière à pouvoir opérer l'ensemble brûleur avec m cannes de premier combustible pendant la maintenance d'une des cannes de premier combustible. De cette manière, l'effet de la maintenance des cannes de premier combustible sur le profil thermique dans le four, et donc sur la productivité du four et/ou la qualité du produit issu du four, est encore plus clairement réduit, voire éliminé.

Il est également possible de prévoir une source de combustible dit de réserve, relié au moyen d'un dispositif d'alimentation de combustible de réserve à une canne de combustible de réserve, de manière à pouvoir, pour un ensemble brûleur ayant en opération normale, une injection de premier combustible dans la zone de combustion au moyen de m cannes de premier combustible, lors de la mise hors fonction d'une des m cannes de premier combustible pour sa maintenance par la fermeture de la première ligne flexible correspondante, de remplacer dans le bloc brûleur, la canne de premier combustible en maintenance par cette canne de combustible de réserve et de pouvoir ainsi opérer l'ensemble brûleur avec m-1 cannes de premier combustible et la canne de combustible de réserve pendant la maintenance d'une des cannes de premier combustible. Une telle mode d'opération est particulièrement indiquée dans le cas d'un four ou autre installation industrielle comportant un nombre important d'ensembles brûleur.

Le combustible de réserve peut également être un combustible gazeux ou liquide. Le combustible de réserve est avantageusement un combustible liquide, étant notamment donné la facilité de stockage et de transport d'un tel combustible.

Le combustible de réserve peut être du même type (gazeux, liquide, ...) que le premier combustible ou de type différent. La composition du combustible de réserve peut correspondre à ou être différente de la composition du premier combustible.

La présente invention concerne également un ensemble brûleur tel que décrit ci-dessus et qui comprend également :
- p cannes de deuxième combustible, avec p > 1 et
- un deuxième dispositif d'alimentation de combustible.

Chacune desdites cannes de deuxième combustible est apte à être montée dans le ou dans un des passages de cannes de combustible et à être enlevée dudit passage de canne de combustible par la face d'entrée, comme déjà indiqué ci-dessus pour les cannes de première combustible.

Le deuxième dispositif de combustible est apte à transporter un flux d'un deuxième combustible d'une source de deuxième combustible vers le bloc brûleur pour son injection dans la zone de combustion à travers un ou des passages de combustible. Le deuxième dispositif d'alimentation de combustible comprend une deuxième ligne d'alimentation, un deuxième débitmètre, un deuxième distributeur et p deuxièmes lignes flexibles reliant le deuxième distributeur aux p cannes de deuxième combustible.

La deuxième ligne d'alimentation est apte à transporter le flux du deuxième combustible de la source de deuxième combustible vers le deuxième distributeur. Le deuxième débitmètre est apte à réguler le débit du flux du deuxième combustible de la source de deuxième combustible vers le deuxième distributeur. Le deuxième distributeur est apte à répartir le flux de deuxième combustible en p flux subsidiaires sur les p deuxièmes lignes flexibles.

Suivant cette forme de réalisation de l'invention, le deuxième dispositif d'alimentation de combustible comporte une ou plusieurs vannes permettant de fermer et d'ouvrir les p deuxièmes lignes flexibles une à une de manière à ce que, quand y des p deuxièmes lignes flexibles sont fermées par lesdites une ou plusieurs vannes, avec 1 ≤ y ≤ p - 1, le deuxième distributeur répartit le flux de deuxième combustible sur la ou les p-y deuxièmes lignes flexibles qui sont ouvertes pour son injection dans la zone de combustion par le ou les cannes de deuxième combustible reliées audite ou auxdites deuxièmes lignes flexibles ouvertes.

Chaque deuxième ligne flexible peut, par exemple, être munie d'une vanne permettant d'ouvrir et de fermer cette ligne flexible. Le deuxième dispositif d'alimentation de combustible peut également comporter une vanne qui permet de fermer et d'ouvrir sélectivement une ou plusieurs des deuxième lignes flexibles.

L'ensemble brûleur peut comporter une unité centrale de commande pour l'ouverture et la fermeture des deuxièmes lignes flexibles par la ou les vannes du deuxième dispositif d'alimentation de combustible et/ou des moyens pour l'opération manuelle de cette ou ces vannes.

Le deuxième combustible peut en particulier être un combustible gazeux ou un combustible liquide.

Le deuxième combustible peut être du même type (gazeux, liquide, ...) que le premier combustible, mais est en pratique le plus souvent de type différent.

Quand on fait appel à un combustible de réserve, le combustible de réserve peut également être un combustible gazeux ou liquide. Le combustible de réserve est avantageusement un combustible liquide, tel que du fioul, étant notamment donné la facilité de stockage et de transport d'un tel

Le nombre n de cannes de premier combustible peut être égal au le nombre p de cannes de deuxième combustible.

Le nombre p de cannes de deuxième combustible peut être égal au nombre m de passages de cannes de combustible du bloc brûleur.

Comme déjà décrit ci-dessus à propos des cannes de premier combustible, le nombre p de cannes de deuxième combustible peut être égal au nombre m de passages de cannes combustible +1.

Des ensembles brûleur comprenant 2 passages de combustible (m= 2), se sont avérés particulièrement pratique pour un nombre d'applications, et notamment pour les fours de fusion.

L'ensemble brûleur suivant l'invention peut être utilisé en aérocombustion, mais s'avère particulièrement utile pour des applications en oxycombustion. L'invention concerne ainsi en particulier un ensemble brûleur dans lequel la source de comburant est une source de comburant ayant une teneur en oxygène d'au moins 80 %vol, de préférence d'au moins 90% vol.

L'ensemble brûleur suivant l'invention est notamment avantageux pour la combustion étagée.

Le procédé de combustion étagée des combustibles consiste à diviser la quantité de comburant nécessaire à la combustion totale du combustible en au moins deux flux de comburant introduits dans la zone de combustion à différentes distances de l'injection du ou des flux de combustible dans cette zone de combustion. Ainsi, au moins un premier flux de comburant est injecté à très proche distance de ou ensemble avec le ou les flux de combustible. Le comburant injecté par ce ou ces flux de comburant injecté(s) le plus proche ou avec le ou les flux de combustible est dénommé comburant primaire. Il permet notamment la combustion partielle du combustible à une température contrôlée qui limite par exemple la formation des NOx. Le ou les autres flux de comburant sont injectés dans la zone de combustion à plus grande distance du combustible que le comburant primaire. Le comburant ainsi injecté permet d'achever la combustion du combustible n'ayant pas réagi avec le comburant primaire. Le comburant injecté par ce ou ces derniers flux est dénommé comburant secondaire.

Le document WO 02/081967 décrit un procédé permettant de mettre en oeuvre ce type de procédé de combustion étagée. L'oxydant est séparé en trois flux distincts, qui sont injectés à différentes distances du point d'injection du combustible et à différentes vitesses. Ainsi, un premier jet d'oxydant est injecté avec une vitesse élevée au centre du jet de combustible. Ensuite, un deuxième jet d'oxydant est injecté avec une vitesse plus faible à une première distance du jet de combustible. Enfin, un troisième jet d'oxydant est injecté à une deuxième distance du jet de combustible, cette deuxième distance étant supérieure à la première distance.

L'invention concerne ainsi également un ensemble brûleur dans lequel le dispositif d'alimentation de comburant est apte à transporter plusieurs flux de comburant d'une source de comburant vers le bloc brûleur pour son injection à travers le au moins un passage de comburant dans la zone de combustion, au moins un desdits flux de comburant étant un flux de comburant secondaire injecté dans la zone de combustion à travers un passage de comburant situé à une distance ds > 0 du ou des passages de canne de combustible et au moins un desdits flux de comburant étant un flux de comburant primaire injecté dans la zone de combustion à travers le ou un des passages de canne de carburant ou à travers un passage de comburant situé à une distance dp du ou des passages de canne de combustible, avec 0 ≤ dp < ds.

Selon une forme de réalisation permettant de stabiliser au mieux la flamme dans la zone de combustion, au moins un des flux de comburant est un flux de comburant primaire injecté à travers le ou un des passages de canne de combustible autour d'un ou des cannes de combustible.

Il est connu d'utiliser un comburant à température élevée, à savoir une température d'au moins 100°C, voire de plusieurs centaines de degrés pour améliorer le rendement énergétique de la combustion.

Les inventeurs ont notamment proposé, dans la demande EP-A-1995543, des échangeurs thermiques permettant de chauffer de l'oxygène de façon satisfaisante.

L'acheminement d'un oxydant chaud impose l'utilisation de moyens spécifiques, généralement fixes, qui ne se prêtent pas aux opérations fréquentes de maintenance évoquées ci-dessus.

Suivant une forme de réalisation de l'invention pour la combustion étagée, le dispositif d'alimentation de comburant comporte des moyens pour le chauffage du au moins un flux de comburant secondaire à une température d'au moins 100°C en amont du bloc brûleur, ledit dispositif d'alimentation de comburant ne comportant pas de moyens pour le chauffage du au moins un flux de comburant primaire. Ledit comburant primaire, qui est injecté dans la zone de combustion à travers le ou un des passages de cannes de carburant ou à travers un ou des passages de comburant situés à une distance dp du ou des passages de cannes de combustible, n'est donc pas chauffé ou préchauffé à une température de 100°C ou plus à l'entrée du bloc brûleur.

Dans le présent contexte, les termes « chauffé » et « préchauffé » sont utilisés de manière interchangeable.

De préférence, le comburant secondaire est préchauffé à une température à l'entrée du bloc brûleur entre 100°C et 650°C, de préférence entre 100°C et 600°C, et encore de préférence entre 350°C et 550°C.

Cette forme de réalisation permet d'améliorer le rendement énergétique grâce à l'utilisation d'un comburant préchauffé pour le comburant secondaire, tout en conservant la flexibilité renforcée du brûleur suivant l'invention, notamment en ce qui concerne la maintenance des cannes de combustible et/ou le passage d'un premier combustible à un deuxième combustible ou à une combinaison de plusieurs combustibles, et ceci grâce à l'utilisation d'un comburant non préchauffé pour le comburant primaire.

Pour conserver au système l'avantage du bilan énergétique inhérent à l'utilisation d'un comburant préchauffé, le comburant primaire non préchauffé ne fournit qu'une très faible fraction de l'ensemble du comburant nécessaire à la combustion totale du combustible. Cette fraction est de manière utile inférieure à 10% de l'ensemble du comburant. Avantageusement cette proportion est comprise entre 1,5 et 7% de l'ensemble du comburant nécessaire pour assurer la combustion complète du combustible.

On comprend que le bénéfice de l'utilisation d'un comburant chaud ne soit pas sensiblement affecté par cette fraction très restreinte de comburant non chauffé.

Par non (pré)chauffé, il faut entendre que le comburant (primaire) se trouve dans les conditions de température essentiellement ambiantes qui règnent sur son trajet l'acheminant vers le four. Au passage des parois réfractaires du four, sa température s'élève nécessairement. La température du comburant non (pré)chauffé est de préférence la température ambiante et ne doit pas dépasser une centaine de degrés Celsius, la température au voisinage du four étant néanmoins sensiblement plus élevée que celle de l'atmosphère à distance du four.

Le comburant primaire et le comburant secondaire peuvent avoir une composition identique ou différente. Quand le comburant primaire et le comburant secondaire ont une même composition, ils peuvent être fournis par une même source de comburant, telle que, par exemple, une unité de séparation des gaz de l'air, le comburant secondaire traversant, en amont du bloc brûleur, des moyens pour le préchauffage dudit comburant secondaire, tels que notamment des échangeurs de chaleur, tandis que le comburant primaire ne traverse pas de moyens pour son préchauffage en amont du bloc brûleur.

Le bloc brûleur peut consister en une seule brique. Le bloc brûleur peut également avantageusement être constitué d'un ensemble de plusieurs briques, typiquement des briques réfractaires. Quand le bloc brûleur consiste en plusieurs briques, lesdites briques peuvent être espacées, notamment quand l'ensemble brûleur est monté dans une paroi d'un four. L'utilisation d'un bloc brûleur qui consiste en plusieurs briques permet en particulier un étagement plus espacé de la combustion, c'est-à-dire : l'injection d'au moins un jet de comburant secondaire à une plus grande distance du ou des injections de combustible. Un bloque brûleur qui consiste en plusieurs briques peut également permettre une injection plus espacée de différents jets de combustible.

Comme déjà indiqué ci-dessus, l'invention concerne notamment un ensemble brûleur dans lequel le bloc brûleur est monté dans une paroi d'un four, la zone de combustion en aval de la face de sortie étant située à l'intérieur du four. L'invention concerne également un four comprenant un tel ensemble brûleur.

L'invention concerne aussi l'utilisation d'un ou plusieurs de ces ensembles brûleur pour effectuer de la combustion de comburant et combustible dans une zone de combustion et en particulier dans une telle zone de combustion à l'intérieur d'un four, ainsi que tout procédé de combustion au moyen d'un ensemble brûleur ou d'un four suivant l'invention.

L'invention concerne notamment l'utilisation d'un ou plusieurs ensembles brûleur pour effectuer de la combustion étagée dans la zone de combustion, et en particulier de la combustion étagée avec un ou des flux de comburant primaire non chauffé et un ou des flux de comburant secondaire chauffé.

### Exemples

Les avantages de la présente invention apparaissent plus clairement de la description détaillée à titre d'exemple ci-après qui se réfère aux figures 1 à 6 dans lesquelles :
- la figure 1 est une représentation schématique du fonctionnement des dispositifs d'alimentation de combustible et comburant d'un ensemble brûleur à combustion étagée suivant l'invention,
- les figures 2 et 3 sont des représentations schématiques du fonctionnement des dispositifs d'alimentation de combustible et comburant d'une mode de réalisation d'un ensemble brûleur à combustion étagée suivant l'invention avec une canne de réserve de premier combustible relié au premier distributeur avant et durant une procédure de maintenance d'une canne de premier combustible,

- la figure 4 est une représentation schématique du fonctionnement des dispositifs d'alimentation de combustible et comburant d'une mode de réalisation d'un ensemble brûleur à combustion étagée suivant l'invention avec une canne de réserve reliée à une source de combustible de réserve,
- les figures 5 et 6 sont des représentations schématiques du fonctionnement des dispositifs d'alimentation de combustible et comburant d'une mode de réalisation d'un ensemble brûleur à combustion étagée suivant l'invention lors du et après le changement d'un premier combustible vers un deuxième combustible.

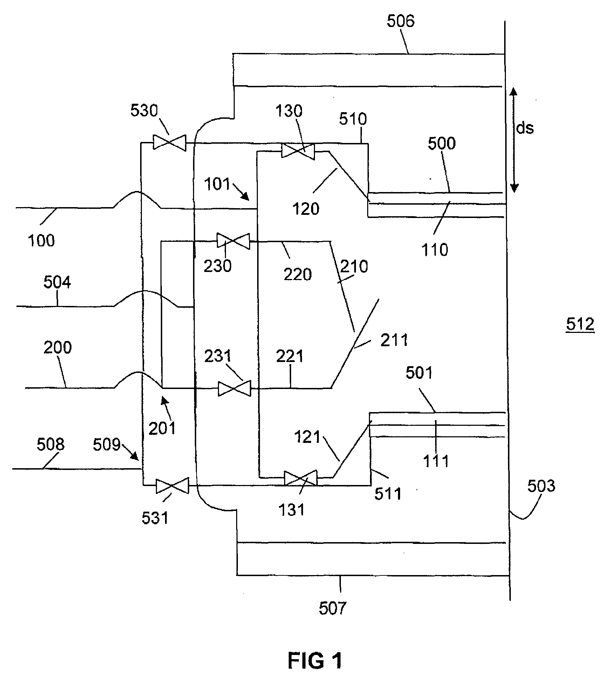

Dans la figure 1, la première ligne d'alimentation 100 du premier dispositif d'alimentation de combustible relie une source de premier combustible (non illustrée) au premier distributeur 101. Le flux de premier combustible de la source de premier combustible vers le premier distributeur est régulé par un premier débitmètre (non illustré).

Le premier distributeur 101 est relié aux deux cannes de premier combustible 110 et 111 par les deux premières lignes flexibles 120 et 121 (n = 2).

Chacune des deux cannes de premier combustible 110 et 111 se trouve à l'intérieur d'un passage de canne de combustible 500, 501 entre la face d'entrée et la face de sortie 503 du bloc (m=2).

Le premier dispositif d'alimentation de combustible comporte également deux vannes 130 et 131 permettant de fermer et d'ouvrir les premières lignes flexibles 120 et 121 individuellement.

La deuxième ligne d'alimentation 200 du deuxième dispositif d'alimentation de combustible relie une source de deuxième combustible (non illustrée) au second distributeur 201. Le deuxième dispositif d'alimentation comprend un deuxième débitmètre (non illustré) pour la régulation d'un flux de deuxième combustible de la source de deuxième combustible vers le deuxième distributeur. Le deuxième dispositif d'alimentation comprend également deux deuxièmes lignes flexibles 220 et 221 pour connecter le deuxième distributeur à deux cannes de deuxième combustible (non illustrées) (p=2), chaque deuxième ligne flexible pouvant être ouverte et fermée par les vannes 230 et 231.

Le dispositif d'alimentation de comburant comporte des lignes d'alimentation d'oxydant secondaire 504 pour le transport d'oxydant secondaire vers deux passages d'oxydant secondaire 506, 507 situés à une distance ds des passages de combustible 110, respectivement 111.

Le dispositif d'alimentation de comburant comporte également un système d'alimentation d'oxydant primaire. Dans la forme de mise en oeuvre illustrée dans les figures, le système d'alimentation d'oxydant primaire comprend une ligne d'alimentation d'oxydant primaire 508 et un distributeur d'oxydant primaire 509. Le distributeur d'oxydant primaire 509 est relié aux passages de combustible 500 et 501 par des canalisations 510, 511. L'oxydant primaire est injecté dans la zone de combustion 512 à travers une zone annulaire autours des cannes de combustible 110 et 111 dans les passages de combustible 500 et 501 (dp = 0). De l'oxydant primaire ainsi injecté autour d'une canne de combustible est généralement appelé « oxydant de gainage ». Les deux vannes 530 et 531 permettent d'ouvrir et de fermer les deux canalisations d'oxydant primaire 510 et 511.

Pour changer le type de combustible ou réaliser la maintenance d'une des m cannes de premier combustible (ici m=2), tout en gardant le brûleur allumé et à une puissance constante, il faut réaliser les étapes suivantes :
(a) Fermer la première ligne flexible 120 (121) correspondant à la canne de premier combustible 110 (111) visée. Cette fermeture est réalisée en fermant la vanne 130 (131). La totalité du flux de premier combustible, par exemple du gaz naturel, est alors automatiquement déviée vers les m-1 (ici m-1=1) premières lignes flexibles encore ouvertes 121 (120) et donc vers les m-1 cannes de premier combustible correspondantes 131 (130). La puissance du brûleur reste la même.
(b) Arrêter l'écoulement d'oxydant de gainage autour de la canne de premier combustible visée 120 (121) afin de pouvoir effectuer le retrait de cette canne du passage de canne de combustible 500 (501) en fermant la canalisation d'oxydant primaire 510 (511) au moyen de la vanne 530 (531). La totalité du flux de l'oxydant de gainage est alors dévié vers les passages de combustible 501 (500) dans lesquels se trouvent le m-1 cannes de combustible toujours en opération 121 (120) (ici m-1=1).
(c) Enlever la canne de premier combustible arrêtée et réaliser éventuellement la maintenance nécessaire.

Dans le cas d'une opération purement de maintenance, après la maintenance ou le remplacement de la canne de premier combustible en question, la procédure inverse est parcouru : la canne de premier combustible arrêtée 110 (111) est réintroduite dans son passage de canne de combustible 500 (501) ; recommencer l'écoulement d'oxydant de gainage autour de cette canne de premier combustible 110 (111) dans ce passage de canne de combustible 500 (501) en ouvrant la canalisation d'oxydant primaire 510 (511) au moyen de la vanne 530 (531) et ouvrir la première ligne flexible 120 (121) correspondant à cette canne de premier combustible 110 (111) au moyen de la vanne 130 (131). La totalité du flux de premier combustible est alors automatiquement redistribuée vers les m (ici m = 2) premières lignes flexibles 121 et 120 et donc vers les m cannes de premier combustible 131 et 130.

Suivant cet exemple, l'ensemble brûleur opère avec m-1 cannes de premier combustible pendant la maintenance d'une des cannes de premier combustible. La puissance du brûleur peut rester constante pendant la procédure de maintenance et l'impact sur la productivité du four et/ou sur la qualité du produit à la sortie du four est fortement limité.

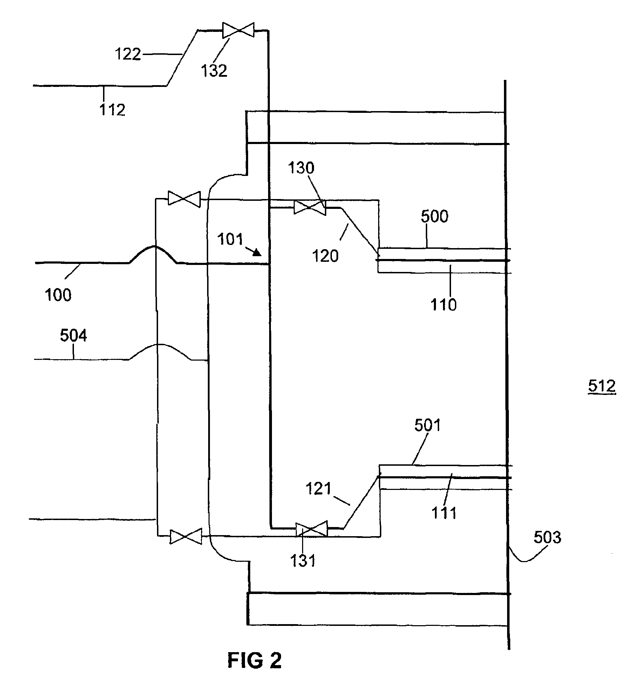

L'ensemble brûleur illustré dans la figure 2 permet de limiter d'avantage l'impact d'une procédure de maintenance ou de changement de cannes de combustible sur la productivité du four et/ou sur la qualité du produit à la sortie du four, notamment dans le cas où l'opérateur souhaite ou se voit obligé de faire une maintenance de longue durée.

Le premier dispositif d'alimentation de combustible de l'ensemble brûleur selon la figure 2, comporte une m+1ème canne de premier combustible 112, une m+1ème première ligne flexible 122 reliée au premier distributeur 101, et une m+1ème vanne 132 permettant d'ouvrir et de fermer la m+1ème première ligne flexible 122 (ici ml = 3).

Avant la procédure de maintenance, la première ligne flexible 122 est fermée et la canne de premier combustible 112 est hors fonction.

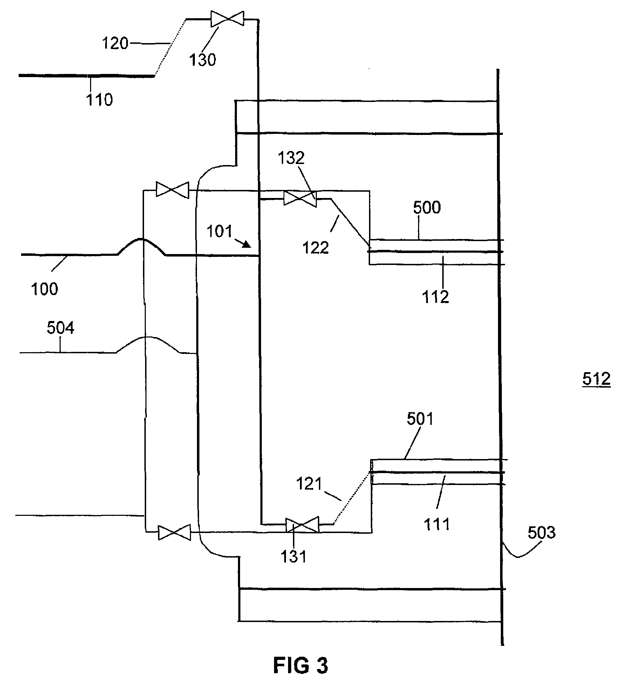

Lors de la maintenance de, par exemple la canne de premier combustible 110, l'opérateur peut, après l'étape (c) ci-dessus :
(d) remplacer la canne de premier combustible 110 par une canne de même combustible 112 préalablement reliée au premier distributeur 101 dudit combustible,
(e) recommencer l'écoulement d'oxydant de gainage dans le passage de canne de combustible 500, cette fois autour de la canne de premier combustible 112 en ouvrant la canalisation d'oxydant primaire 510 au moyen de la vanne 530, et
(f) ouvrir la première ligne flexible 122 correspondant à cette canne de premier combustible 112 au moyen de la vanne 132.
Comme montré dans la figure 3, la totalité du flux de premier combustible est alors automatiquement redistribuée vers les m (ici m = 2) premières lignes flexibles 122 et 121 et donc vers les m cannes de premier combustible 132 et 131. La maintenance de la canne 110 peut alors être effectuée pendant que l'ensemble brûleur fonctionne en régime normale.

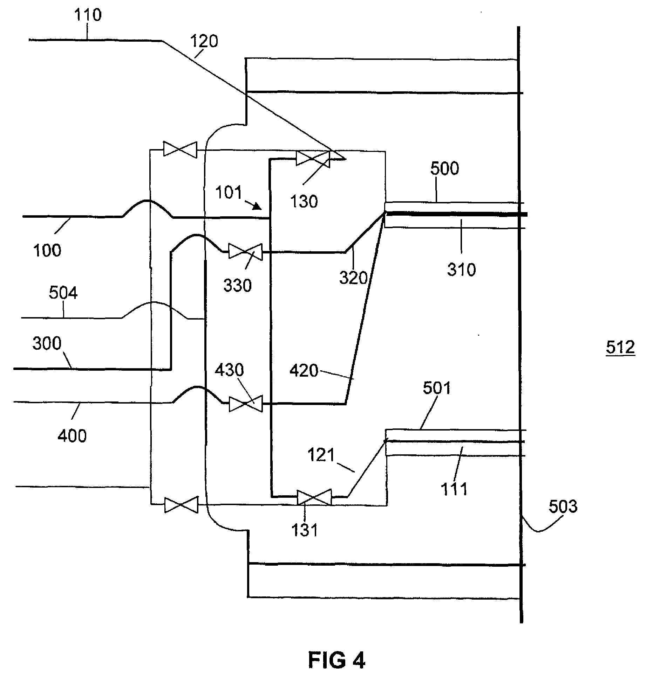

La figure 4 montre une mode de réalisation alternative d'un ensemble brûleur suivant l'invention.

Dans le cas où l'opérateur souhaite ou se voit obligé de faire une maintenance de longue durée de, par exemple, la canne de premier combustible 110, l'opérateur peut, après l'étape (c) ci-dessus :
(g) remplacer la canne de premier combustible 110 par une canne de combustible de réserve 310 reliée à une source de combustible de réserve (non illustrée), telle que, par exemple, une source de fioul. La canne de combustible de réserve 310 est une canne spécifiquement conçue pour l'injection dudit combustible de réserve.
(h) recommencer l'écoulement d'oxydant de gainage dans le passage de canne de combustible 500, cette fois autour de la canne de combustible de réserve 310 en ouvrant la canalisation d'oxydant primaire 510 au moyen de la vanne 530, et
(i) ouvrir la ligne flexible de réserve 320 reliée à la canne de combustible de réserve au moyen de la vanne 330 et réguler le flux de combustible de réserve vers la canne de combustible de réserve 310 et le flux de premier combustible vers le m-1 cannes de premier combustible 111 reliées aux m-1 premières lignes flexibles ouvertes 121 (ici m-1 =1) de manière à réaliser la puissance recherchée pour l'ensemble brûleur.

Dans le cas précis du fioul, ou d'autres combustibles liquides, en tant que combustible de réserve, chaque canne de fioul 310 est également alimentée par un fluide d'atomisation. Il faut donc prévoir une ligne flexible 420 pour ce fluide d'atomisation avec sa vanne associée 430. L'opérateur ouvre la vanne 430 avant d'ouvrir la vanne 330 du fioul, qui est dans ce cas le combustible de réserve. Afin d'arrivée à la puissance nominale, l'opérateur diminue, manuellement ou par des automates, la puissance du combustible 1 tout en augmentant de la puissance du combustible 2 jusqu'à la moitié de la puissance brûleur, le tout en respectant les consignes de débit du fluide d'atomisation.

Comme montré dans la figure 4, l'ensemble brûleur opère alors en régime mixte avec injection dans la zone de combustion d'une part d'un flux de premier combustible et d'autre part d'un flux de combustible de réserve. La maintenance de la canne 110 peut alors être effectuée pendant que l'ensemble brûleur fonctionne en régime mixte avec un impact minimal sur la productivité du four et/ou sur la qualité du produit à la sortie du four.

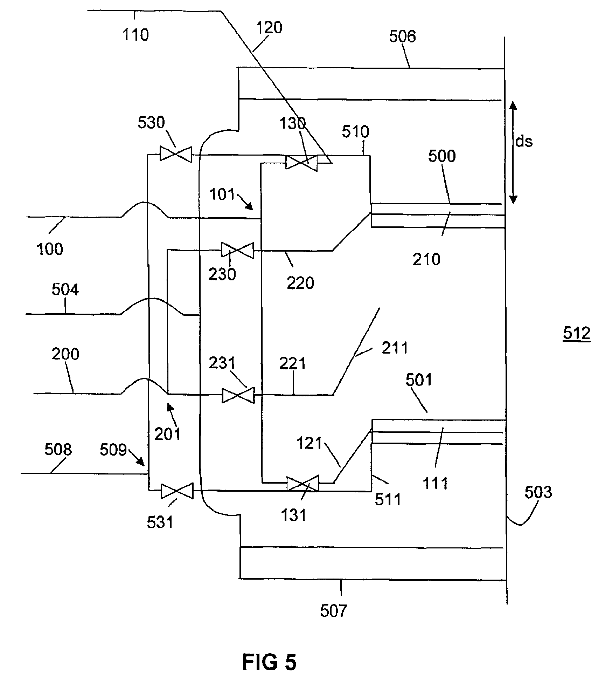

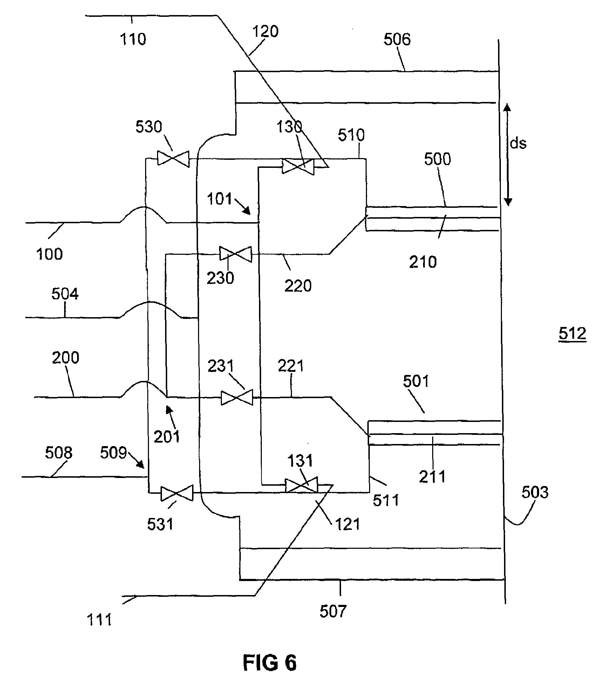

Pour remplacer complètement le premier combustible avec le deuxième combustible dans la mode de réalisation illustrée dans la figure 1, il faut, comme illustré dans les figure 5 et 6, suivre un scénario analogue pour le remplacement des m cannes de premier combustible (ici m = 2) par les p cannes de deuxième combustible (ici m = 2).

Après l'étape (c) ci-dessus, on :
(j) remplace la canne de premier combustible 110 par une canne de deuxième combustible 210 reliée au deuxième distributeur 201 du deuxième combustible,
(k) recommence l'écoulement d'oxydant de gainage dans le passage de canne de combustible 500, cette fois autour de la canne de deuxième combustible 210 en ouvrant la canalisation d'oxydant primaire 510 au moyen de la vanne 530, et
(l) ouvre la deuxième ligne flexible 220 correspondant à cette canne de deuxième combustible 210 au moyen de la vanne 230 en régulant les flux de premier et de deuxième combustibles vers les cannes de combustible 111 et 210 reliées aux premières et deuxièmes lignes flexibles ouvertes 121 et 220 de manière à réaliser la puissance recherchée pour l'ensemble brûleur.

L'ensemble brûleur opère alors (figure 5) en régime mixte avec injection dans la zone de combustion d'une part d'un flux de premier combustible et d'autre part d'un flux de deuxième combustible.

On répète ensuite les étapes (j) à (l) pour le remplacement des m-1 (ici m-1 = 1) autres cannes de premier combustibles 111 par des cannes de deuxième combustible 121 pour arriver à un fonctionnement de l'ensemble brûleur avec uniquement un flux du deuxième combustible (figure 6) et à la puissance recherchée.

Ainsi, l'ensemble brûleur suivant l'invention permet de passer d'un premier combustible à un deuxième combustible, voire à un régime mixte de deux combustibles, sans avoir à arrêter l'ensemble brûleur et sans avoir à diminuer la puissance de l'ensemble brûleur et avec un impact minimal sur la productivité du four et/ou sur la qualité du produit à la sortie du four.

Les remarques ci-dessus concernant les cannes à combustible liquide s'appliquent évidemment à l'ensemble des cannes de combustible liquide, qui peuvent être des cannes de premier combustible, des cannes de deuxième combustible ou des cannes de réserve.

## Revendications

1. Ensemble brûleur comprenant :
• un bloc brûleur présentant une face d'entrée et une face de sortie (503), au moins un passage de comburant (506, 507) entre la face d'entrée et la face de sortie et au moins un passage de canne de combustible (500, 501) entre la face d'entrée et la face de sortie, le bloc brûleur étant tel que m cannes de combustible peuvent simultanément être montées dans le bloc brûleur à travers le au moins un passage de canne de combustible (500, 501), avec m >1,
• n cannes de premier combustible (110, 111), avec n > 1, chaque canne de premier combustible (110, 111) étant apte à être montée dans le ou dans un des passages de canne de combustible (500, 501) et à être enlevée dudit passage de canne de combustible (500, 501) par la face d'entrée du bloc brûleur,
• un dispositif d'alimentation de comburant apte à transporter un flux de comburant d'une source de comburant vers le bloc brûleur pour son injection à travers le au moins un passage de comburant (506, 507) dans une zone de combustion située en aval de la face de sortie (503),
• un premier dispositif d'alimentation de combustible apte à transporter un flux d'un premier combustible d'une source de premier combustible vers le bloc brûleur pour son injection dans la zone de combustion à travers un ou des passages de combustible (500, 501), le premier dispositif d'alimentation de combustible comprenant une première ligne (100) d'alimentation, un premier débitmètre, un premier distributeur (101) et n premières lignes flexibles (120, 121) reliant le premier distributeur aux n cannes de premier combustible (110, 111),
i. la première ligne d'alimentation étant apte à transporter le flux du premier combustible de la source de premier combustible vers le premier distributeur,
ii. le premier débitmètre étant apte à réguler le débit du flux du premier combustible de la source de premier combustible vers le premier distributeur,
iii. le premier distributeur étant apte à répartir le flux de premier combustible en n flux subsidiaires sur les n premières lignes flexibles,
**caractérisé en ce que** :
• le premier dispositif d'alimentation de combustible comporte une ou plusieurs vannes (130, 131) permettant de fermer et d'ouvrir les n premières lignes flexibles une à une de manière à ce que, quand x des n premières lignes flexibles sont fermées par lesdites une ou plusieurs vannes, avec 1 ≤ x ≤ n-1, le premier distributeur répartit le flux de premier combustible sur les n-x premières lignes flexibles qui sont ouvertes pour son injection dans la zone de combustion par le ou les cannes de premier combustible reliées auxdites premières lignes flexibles ouvertes.

2. Ensemble brûleur suivant la revendication 1, dans lequel n = m.

3. Ensemble brûleur suivant la revendication 1, dans lequel n = m +1.

4. Ensemble brûleur suivant l'une des revendications 1 à 3, comprenant également :
• p cannes de deuxième combustible (210, 211), avec p > 1, chaque canne de deuxième combustible étant apte à être montée dans le ou dans un des passages de canne de combustible (500, 501) et à être enlevée dudit passage de canne de combustible par la face d'entrée,
• un deuxième dispositif d'alimentation de combustible apte à transporter un flux d'un deuxième combustible d'une source de deuxième combustible vers le bloc brûleur pour son injection dans la zone de combustion (512) à travers un ou des passages de canne de combustible (500, 501), le deuxième dispositif d'alimentation de combustible comprenant une deuxième ligne d'alimentation (200), un deuxième débitmètre, un deuxième distributeur (201) et p deuxièmes lignes flexibles (220, 221) reliant le deuxième distributeur aux p cannes de deuxième combustible,
i. la deuxième ligne d'alimentation étant apte à transporter le flux du deuxième combustible de la source de deuxième combustible vers le deuxième distributeur,
ii. le deuxième débitmètre étant apte à réguler le débit du flux du deuxième combustible de la source de deuxième combustible vers le deuxième distributeur,
iii. le deuxième distributeur étant apte à répartir le flux de deuxième combustible en p flux subsidiaires sur les p deuxièmes lignes flexibles,
**caractérisé en ce que** :
• le deuxième dispositif d'alimentation de combustible comporte une ou plusieurs vannes (230, 231) permettant de fermer et d'ouvrir les p deuxièmes lignes flexibles une à une de manière à ce que, quand y des p deuxièmes lignes flexibles sont fermées par lesdites une ou plusieurs vannes, avec 1 ≤ y ≤ p - 1, le deuxième distributeur répartit le flux de deuxième combustible sur la ou les p-y deuxièmes lignes flexibles qui sont ouvertes pour son injection dans la zone de combustion par le ou les cannes de deuxième combustible reliées audite ou auxdites deuxièmes lignes flexibles ouvertes.

5. Ensemble brûleur suivant la revendication 4, dans lequel n = p.

6. Ensemble brûleur suivant la revendication 4 ou 5, dans lequel p = m.

7. Ensemble brûleur suivant la revendication 4 ou 5, dans lequel p = m +1.

8. Ensemble brûleur suivant l'une des revendications précédentes, dans lequel m = 2.

9. Ensemble brûleur suivant l'une des revendications précédentes dans lequel la source de comburant est une source de comburant ayant une teneur en oxygène d'au moins 80 %vol, de préférence d'au moins 90 % vol.

10. Ensemble brûleur suivant l'une des revendications précédentes pour la combustion étagée, dans lequel le dispositif d'alimentation de comburant est apte à transporter plusieurs flux de comburant d'une source de comburant vers le bloc brûleur pour son injection dans la zone de combustion (512):
• au moins un desdits flux de comburant étant un flux de comburant secondaire injecté dans la zone de combustion à travers un passage de comburant (506, 507) situé à une distance ds>0 du ou des passages de canne de combustible (500, 501) et
• au moins un desdits flux de comburant étant un flux de comburant primaire injecté dans la zone de combustion
- à travers le ou un des passages de canne de combustible (500, 501) ou
- à travers un passage de comburant situé à une distance dp du ou des passages de canne de combustible, avec dp < ds.

11. Ensemble brûleur suivant la revendication 12, dans lequel au moins un des flux de comburant est un flux de comburant primaire injecté à travers le ou un des passages de canne de combustible (500, 501) et autour d'un ou des cannes de combustible (500, 501).

12. Ensemble brûleur suivant l'une des revendications précédentes dans lequel le bloc brûleur est un ensemble de plusieurs briques réfractaires.

13. Ensemble brûleur suivant l'une des revendications précédentes, dans lequel le bloc brûleur est monté dans une paroi d'un four, la zone de combustion (512) en aval de la face de sortie (503) étant située à l'intérieur du four.

14. Four comprenant un ensemble brûleur suivant la revendication 13.

15. Procédé de combustion au moyen d'un ensemble brûleur suivant l'une quelconque des revendications 1 à 13 ou au moyen d'un four suivant la revendication 14.

## Patentansprüche

1. Brennereinheit, Folgendes umfassend:
- einen Brennerblock, der eine Eintrittsfläche und eine Austrittsfläche (503) aufweist, zumindest einen Sauerstoffträgerkanal (506, 507) zwischen der Eintrittsfläche und der Austrittsfläche, und zumindest einen Brennstoffrohrkanal (500, 501) zwischen der Eintrittsfläche und der Austrittsfläche, wobei der Brennerblock derart gestaltet ist, dass m Brennstoffrohre zugleich im Brennerblock durch den zumindest einen Brennstoffrohrkanal (500, 501) hindurch montiert werden können, wobei m > 1 ist,
- n Rohre eines ersten Brennstoffs (110, 111), mit n > 1, wobei jedes Rohr eines ersten Brennstoffs (110, 111) imstande ist, in dem oder in einem der Brennstoffrohrkanäle (500, 501) montiert zu werden, und um aus dem besagten Brennstoffrohrkanal (500, 501) durch die Eintrittsfläche des Brennerblocks entfernt zu werden,
- eine Zuführvorrichtung für einen Sauerstoffträger, die imstande ist, eine Sauerstoffträgerströmung aus einer Sauerstoffträgerquelle zum Brennerblock für dessen Einspritzung durch den zumindest einen Sauerstoffträgerkanal (506, 507) in eine Verbrennungszone, die sich stromabwärts der Austrittsfläche (503) befindet,
- eine erste Zuführvorrichtung für einen Brennstoff, die imstande ist, eine Strömung eines ersten Brennstoffs aus einer Quelle eines ersten Brennstoffs zum Brennerblock für dessen Einspritzung in eine Verbrennungszone durch einen oder mehrere Brennstoffkanäle (500, 501) zu transportieren, wobei die erste Zuführvorrichtung für einen Brennstoff eine erste Zuführleitung (100) umfasst, einen ersten Durchflussmesser, einen ersten Verteiler (101) und n erste flexible Leitungen (120, 121), die den ersten Verteiler mit den n Rohren eines ersten Brennstoffs (110, 111) verbinden,
i. wobei die erste Zuführleitung imstande ist, die Strömung des ersten Brennstoffs aus der Quelle eines ersten Brennstoffs zum ersten Verteiler zu transportieren,
ii. wobei der erste Durchflussmesser imstande ist, den Durchfluss der Strömung des ersten Brennstoffs aus der Quelle eines ersten Brennstoffs zum ersten Verteiler zu regeln,
iii. wobei der erste Verteiler imstande ist, die Strömung eines ersten Brennstoffs in n Unterströmungen in den ersten n flexiblen Leitungen zu verteilen, **dadurch gekennzeichnet, dass**:
- die erste Zuführvorrichtung für einen Brennstoff ein oder mehrere Ventile (130, 131) umfasst, die es ermöglichen, die ersten n flexiblen Leitungen einzeln zu schließen und zu öffnen, sodass, wenn x der ersten n flexiblen Leitungen durch das besagte eine oder die mehreren Ventile geschlossen werden, mit 1 ≤ x ≤ x-1, der erste Verteiler die Strömung eines ersten Brennstoffs auf die ersten n-x flexiblen Leitungen verteilt, die für dessen Einspritzung in die Verbrennungszone durch das oder die Rohre eines ersten Brennstoffs offen sind, die mit den besagten offenen ersten flexiblen Leitungen verbunden sind.

2. Brennereinheit nach Anspruch 1, wobei n = m ist.

3. Brennereinheit nach Anspruch 1, wobei n = m + 1 ist.

4. Brennereinheit nach einem der Ansprüche 1 bis 3, ebenfalls Folgendes umfassend:
- p Rohre eines zweiten Brennstoffs (210, 211), mit p > 1, wobei jedes Rohr eines zweiten Brennstoffs imstande ist, in dem oder in einem der Brennstoffrohrkanäle (500, 501) montiert zu werden, und um aus dem besagten Brennstoffrohrkanal durch die Eintrittsfläche entfernt zu werden,
- eine zweite Zuführvorrichtung für einen Brennstoff, die imstande ist, eine Strömung eines zweiten Brennstoffs aus einer Quelle eines zweiten Brennstoffs zum Brennerblock für dessen Einspritzung in die Verbrennungszone (512) durch einen oder mehrere Brennstoffkanäle (500, 501) zu transportieren, wobei die zweite Zuführvorrichtung für einen Brennstoff eine zweite Zuführleitung (200) umfasst, einen zweiten Durchflussmesser, einen zweiten Verteiler (201) und p zweite flexible Leitungen (220, 221), die den zweiten Verteiler mit den p Rohren eines zweiten Brennstoffs verbinden,
i. wobei die zweite Zuführleitung imstande ist, die Strömung des zweiten Brennstoffs aus der Quelle eines zweiten Brennstoffs zum zweiten Verteiler zu transportieren,
ii. wobei der zweite Durchflussmesser imstande ist, den Durchfluss der Strömung des zweiten Brennstoffs aus der Quelle eines zweiten Brennstoffs zum zweiten Verteiler zu regeln,
iii. wobei der zweite Verteiler imstande ist, die Strömung eines zweiten Brennstoffs in p Unterströmungen in den zweiten p flexiblen Leitungen zu verteilen,
**dadurch gekennzeichnet, dass**:
- die zweite Zuführvorrichtung für einen Brennstoff ein oder mehrere Ventile (230, 231) umfasst, die es ermöglichen, die zweiten p flexiblen Leitungen einzeln zu schließen und zu öffnen, sodass, wenn y der zweiten p flexiblen Leitungen durch das besagte eine oder die mehreren Ventile geschlossen werden, mit 1 ≤ y ≤ p-1, der zweite Verteiler die Strömung eines zweiten Brennstoffs auf die zweite(n) p-y flexible(n) Leitung(en) verteilt, die für dessen Einspritzung in die Verbrennungszone durch das oder die Rohre eines zweiten Brennstoffs offen sind, die mit der besagten oder den besagten offenen zweiten flexiblen Leitung(en) verbunden sind.

5. Brennereinheit nach Anspruch 4, wobei n = p ist.

6. Brennereinheit nach Anspruch 4 oder 5, wobei p = m ist.

7. Brennereinheit nach Anspruch 4 oder 5, wobei p = m + 1 ist.

8. Brennereinheit nach einem der vorherigen Ansprüche, wobei m = 2 ist.

9. Brennereinheit nach einem der vorherigen Ansprüche, wobei die Quelle eines Sauerstoffträgers eine Quelle eines Sauerstoffträgers ist, die einen Sauerstoffgehalt von zumindest 80 Vol.-%, vorzugsweise von zumindest 90 Vol.-% aufweist.

10. Brennereinheit nach einem der vorherigen Ansprüche für die gestufte Verbrennung, wobei die Zuführvorrichtung für einen Sauerstoffträger imstande ist, mehrere Strömungen eines Sauerstoffträgers aus einer Quelle eines Sauerstoffträgers zum Brennerblock für deren Einspritzung in die Verbrennungszone (512) zu transportieren:
- wobei zumindest eine der besagten Strömungen eines Sauerstoffträgers eine Sekundärströmung eines Sauerstoffträgers ist, die durch einen Sauerstoffträgerkanal (506, 507) in die Verbrennungszone eingespritzt wird, der sich in einem Abstand ds > 0 von dem oder den Brennstoffrohrkanälen (500, 501) befindet und
- zumindest eine der besagten Strömungen eines Sauerstoffträgers eine Primärströmung eines Sauerstoffträgers ist, die in die Verbrennungszone eingespritzt wird
-- durch den oder die Brennstoffrohrkanäle (500, 501) oder
-- durch einen Sauerstoffträgerkanal, der sich in einem Abstand dp von dem oder den Brennstoffrohrkanälen befindet, mit dp < ds.

11. Brennereinheit nach Anspruch 12, wobei zumindest eine der Strömungen eines Sauerstoffträgers eine Primärströmung eines Sauerstoffträgers ist, die durch den oder einen der Brennstoffrohrkanäle (500, 501) hindurch und um eines oder mehrere Brennstoffrohre (500, 501) eingespritzt wird.

12. Brennereinheit nach einem der vorherigen Ansprüche, wobei der Brennerblock eine Einheit aus mehreren feuerfesten Ziegeln bestehend ist.

13. Brennereinheit nach einem der vorherigen Ansprüche, wobei der Brennerblock in einer Wand eines Ofens montiert ist, wobei sich die Verbrennungszone (512) stromabwärts der Austrittsfläche (503) im Inneren des Ofens befindet.

14. Ofen, eine Brennereinheit nach Anspruch 13 umfassend.

15. Verbrennungsverfahren anhand einer Brennereinheit nach einem der Ansprüche 1 bis 13 oder anhand eines Ofens nach Anspruch 14.

## Claims

1. Burner assembly comprising:
- a burner unit having an inlet face and an outlet face (503), at least one passage of combustion agent (506, 507) between the inlet face and the outlet face and at least one fuel rod passage (500, 501) between the inlet face and the outlet face, the burner unit being such that m fuel rods can simultaneously be mounted in the burner unit through the at least one fuel rod passage (500, 501), with m > 1,
- n rods of a first fuel (110, 111), with n > 1, each rod of a first fuel (110, 111) able to be mounted in the or in one of the fuel rod passages (500, 501) and to be removed from said fuel rod passage (500, 501) par the inlet face du burner unit,
- a combustion agent supply device able to transport a flow of combustion agent to the burner unit for the injection thereof through the at least one combustion agent passage (506, 507) in a combustion zone located downstream of the outlet face (503),
- a first fuel supply device able to transport a flow of a first fuel from a source of first fuel to the burner unit for the injection thereof into the combustion zone through one or several fuel passages (500, 501), the first fuel supply device comprising a first supply line (100), a first flow meter, a first distributor (101) and n first flexible lines (120, 121) connecting the first distributor to the n rods of a first fuel (110, 111),
i. the first supply line being able to transport the flow of the first fuel from the source of first fuel to the first distributor,
ii. the first flow meter being able to regulate the flow rate of the flow of the first fuel from the source of first fuel to the first distributor,
iii. the first distributor being able to distribute the flow of the first fuel into n subsidiary flows over the n first flexible lines,
**characterised in that**:
- the first fuel supply device comprises one or several valves (130, 131) making it possible to close and to open the n first flexible lines one by one in such a way that, when x of the n first flexible lines are closed by said one or several valves, with 1 ≤ x ≤ n-1, the first distributor distributes the flow of the first fuel over the n-x first flexible lines which are open for the injection thereof into the combustion zone by the rod or rods of a first fuel connected to said first open flexible lines.

2. Burner assembly according to claim 1, wherein n = m.

3. Burner assembly according to claim 1, wherein n = m + 1.

4. Burner assembly according to one of claims 1 to 3, also comprising:
- p rods of a second fuel (210, 211), with p > 1, each rod of a second fuel able to be mounted in the or in one of the fuel rod passages (500, 501) and to be removed from said fuel rod passage by the inlet face,
- a second fuel supply device able to transport a flow of a second combustible from a source of a second fuel to the burner unit for the injection thereof into the combustion zone (512) through one or several fuel rod passages (500, 501), the second fuel supply device comprising a second supply line (200), a second flow meter, a second distributor (201) and p second flexible lines (220, 221) connecting the second distributor to the p rods of a second fuel,
i. the second supply line being able to transport the flow of the second fuel from the source of a second fuel to the second distributor,
ii. the second flow meter being able to regulate the flow rate of the flow of the second fuel from the source of a second fuel to the second distributor,
iii. the second distributor being able to distribute the flow of the second fuel into p subsidiary flows over the p second flexible lines,
**characterised in that**:
- the second fuel supply device comprises one or several valves (230, 231) making it possible to close and to open the p second flexible lines one by one in such a way that, when y of the p second flexible lines are closed by said one or several valves, with 1 ≤ Y ≤ P - 1, the second distributor distributes the flow of the second fuel over the p-y second flexible line or lines which are open for the injection thereof into the combustion zone via the rod or rods of a second fuel connected to said second open flexible line or lines.

5. Burner assembly according to claim 4, wherein n = p.

6. Burner assembly according to claim 4 or 5, wherein p = m.

7. Burner assembly according to claim 4 or 5, wherein p = m +1.

8. Burner assembly according to one of the preceding claims, wherein m = 2.

9. Burner assembly according to one of the preceding claims wherein the source of the combustion agent is a source of combustion agent that has an oxygen content of at least 80% vol, more preferably of at least 90% vol.

10. Burner assembly according to one of the preceding claims for the tiered combustion, wherein the combustion agent supply device is able to transport several flows of combustion agent from a source of combustion agent to the burner unit for the injection into the combustion zone (512):
- at least one of said flows of combustion agent being a flow of secondary combustion agent injected into the combustion zone through a combustion agent passage (506, 507) located at a distance ds>0 from the fuel rod passage or passages (500,501) and
- at least one of said flows of combustion agent being a flow of primary combustion agent injected into the combustion zone
-- through the fuel rod passage or passages (500, 501) or
-- through a combustion agent passage located at a distance dp from the fuel rod passage or passages, with dp < ds.

11. Burner assembly according to claim 12, wherein at least one of the flows of combustion agent is a flow of primary combustion agent injected through the fuel rod passage or passages (500, 501) and around a fuel rod or rods (500, 501).

12. Burner assembly according to one of the preceding claims wherein the burner unit is an assembly of several refractory bricks.

13. Burner assembly according to one of the preceding claims, wherein the burner unit is mounted in a wall of an oven, with the combustion zone (512) downstream of the outlet face (503) being located inside the oven.

14. Oven comprising a burner assembly according to claim 13.

15. Method of combustion by means of a burner assembly according to any of claims 1 to 13 or by means of an oven according to claim 14.
